Europäisches Patentamt

European Patent Office

Office européen des brevets

(19)

(11) Veröffentlichungsnummer: **0 355 673 B1**

(12) **EUROPÄISCHE PATENTSCHRIFT**

(45) Veröffentlichungstag der Patentschrift: **02.12.92**

(51) Int. Cl.5: **B26F 1/38**

(21) Anmeldenummer: **89115060.9**

(22) Anmeldetag: **16.08.89**

(54) **Stanze, insbesondere Flachbettstanze.**

(30) Priorität: **16.08.88 DE 8810331 U**

(43) Veröffentlichungstag der Anmeldung:
**28.02.90 Patentblatt 90/09**

(45) Bekanntmachung des Hinweises auf die
Patenterteilung:
**02.12.92 Patentblatt 92/49**

(84) Benannte Vertragsstaaten:
**AT BE CH DE ES FR GB GR IT LI NL SE**

(56) Entgegenhaltungen:
**DE-A- 3 620 853**
**DE-A- 3 701 603**

(73) Patentinhaber: **DELKESKAMP KG**
**Hauptstrasse 15**
**W-4577 Nortrup(DE)**

(72) Erfinder: **Nagl, Otmar**
**Herrenwiesen 5**
**W-3004 Isernhagen 4(DE)**

(74) Vertreter: **Eisenführ, Speiser & Partner**
**Martinistrasse 24**
**W-2800 Bremen 1(DE)**

# Beschreibung

Die Erfindung betrifft eine Stanze, insbesondere Flachbett- oder Rotationsstanze, mit einem metallischen Werkzeugträger und mit einem Stanzwerkzeug, das über die arbeitsseitige Oberfläche einer Grundplatte senkrecht hinausragende, gegebenenfalls von Schaumgummistreifen eingefaßte Schneid- und/oder Preßkanten aufweist und mittels Halteelementen im wesentlichen flächig auf einer Aufspannfläche des Werkzeugträgers fixierbar ist, und mit einem von der Aufspannfläche beabstandeten Gegenstanzelement.

Derartige Stanzen sind bekannt und dienen dem Ausstanzen von Zuschnitten aus Wellpappbahnen, die in nachfolgenden Arbeitsgängen zu Verpackungen der unterschiedlichsten Art aufgerichtet werden. Eine Flachbettstanze besteht im wesentlichen aus einem oberhalb der intermittierend transportierten Wellpappe angeordneten stählernen Werkzeugträger in Form einer ebenen Platte zur Aufnahme des Stanzwerkzeugs und einem üblicherweise vertikal darunter befindlichen plattenförmigen Gegenstanzelement, das die Pappbahn trägt bzw. führt. Das Gegenstanzelement führt bei einer Flachbettstanze die durch einen oszillierenden Antrieb bewirkte Hubbewegung aus. Der Werkzeugträger und das Gegenstanzelement sind aufgrund der hohen Belastungen beim Stanzvorgang aus gehärtetem Stahl hergestellt. Die Grundplatte des Stanzwerkzeugs besteht aus einem weicheren Material, beispielsweise Holz, und dient in erster Linie der Halterung der Schneid- und/oder Preßkanten, die in durchgehenden Schlitzen in der Grundplatte geführt sind und sich auf der Aufspannfläche des Werkzeugträgers abstützen.

Bei den bekannten Stanzen der beschriebenen Art werden die Grundplatten des Stanzwerkzeugs auf der Aufspannfläche des Werkzeugträgers dadurch fixiert, daß sie mittels mehrerer durch vorgegebene Bohrungen in dem Werkzeugträger geführter Schrauben festgeschraubt werden. Hierzu ist erforderlich, in die Grundplatten jeweils dort Bohrungen zur Aufnahme von Schlagmuttern einzuarbeiten, wo es die Lage von fest vorgegebenen Bohrungen in dem Werkzeugträger verlangt. Die Toleranzen für Abweichungen der Grundplatten von ihrer Soll-Lage müssen äußerst gering sein. Um Lagefehler der Bohrungen möglichst zu vermeiden, wird die Grundplatte üblicherweise erst mit Hilfe von Winkeln, Klemmstücken und dergleichen provisorisch an dem Werkzeugträger befestigt, um dann durch die Bohrungen des Werkzeugträgers entweder die erforderliche Lage der Bohrungen auf der Rückseite der Grundplatte markieren oder direkt bohren zu können.

Rotationsstanzen arbeiten mit rotierenden Werkzeugen, die auf eine Walze aufgespannt sind, welche ihrerseits den Werkzeugträger der Rotationsstanze darstellt. Als Gegenstanzelement dient ebenfalls eine Walze, die herkömmlicherweise mit einem vergleichsweise weichem Material beschichtet ist oder aus einem derartigen Material hergestellte Ringe an denjenigen Stellen aufweist, denen sich am walzenförmigen Werkzeugträger Schneid-, Trenn- oder Rillelemente des Werkzeuges befinden.

Der walzenförmige Werkzeugträger einer Rotationsstanze ist herkömmlich mit einer Vielzahl von achsparallel aufeinander folgend in die Oberfläche des Werkzeugträgers eingesenkten Gewindebohrungen ausgerüstet. Von diesen achsparallelen Reihen von Gewindebohrungen gibt es üblicherweise eine gleichmäßig über den Umfang verteilte größere Anzahl. Diese Bohrungen dienen zur Aufnahme von Befestigungsschrauben für die Stanzwerkzeuge, die bei Rotationsstanzen - entsprechend der zylindrischen Ausbildung des Werkzeugträgers - ein entsprechend gekrümmte Grundplatte aufweisen. Zum Befestigen und Ausrichten der Stanzwerkzeuge in Rotationspressen ist ein eben solcher Aufwand erforderlich, wie bei den Flachbettstanzen.

Der gesamte Aufwand, der zur Befestigung einer Grundplatte bei den bekannten Stanzen betrieben werden muß, trägt in nicht unerheblichem Maße zu den Kosten für ein Stanzwerkzeug bei. Daher galt es die Aufgabe zu lösen, diese Kosten für das Stanzwerkzeug zu senken.

Ausgehend von einer Stanze der eingangs genannten Art besteht die erfindungsgemäße Lösung dieser Aufgabe darin, daß die Halteelemente wenigstens teilweise aus magnetischem Material bestehen und mindestens eine mit der Aufspannfläche des Werkzeugträgers flächig in magnetischen Wirkkontakt bringbare Unterfläche besitzen sowie mindestens eine Anschlagfläche aufweist, die an Flächenabschnitten der Grundplatte zu deren Fixierung auf der Aufspannfläche anlegbar ist.

Somit entfällt das umständliche und zu den Kosten für das Stanzwerkzeug durch den erforderlichen Arbeitsaufwand erheblich beitragende Verschrauben der Grundplatte des Stanzwerkzeugs mit dem Werkzeugträger, indem die Grundplatte durch magnetische Halteelemente, die durch ihr Magnetfeld auf dem metallischen Werkzeugträger haften, auf der Aufspannfläche des Werkzeugträgers fixiert und in jeder möglichen Bewegungsrichtung blockiert wird.

Ein zusätzlicher Vorteil dieser Lösung ist, daß das Einrichten und Befestigen des Stanzwerkzeugs in wesentlich kürzerer Zeit als bei den bekannten Stanzen durchführbar ist. Dieser Vorteil wirkt sich insbesondere dadurch kostensenkend aus, daß die erfindungsgemäß ausgebildete Stanze für einen Um- oder Einrüstvorgang eines Stanzwerkzeugs einen erheblich kürzeren Zeitraum stillstehen muß, als es bei den bekannten Stanzen der eingangs genannten Art erforderlich ist.

Bevorzugte Ausgestaltungen und Weiterbildungen der Erfindung sind in den Unteransprüchen angegeben. So werden beispielhaft einige Varianten zur Ausgestaltung der erfindungsgemäßen Halteelemente angegeben. Gemäß einer ersten Variante ist vorgesehen, daß ein Halteelement als Bolzen ausgebildet ist, dessen Umfangsfläche eine im wesentlichen senkrecht zur Aufspannfläche ausgerichtete Anschlagfläche bildet und der durch eine senkrecht zur Aufspannfläche die Grundplatte durchsetzende Bohrung oder an einem Rand der Grundplatte anliegend mit seiner Unterfläche in Wirkverbindung mit der Aufspannfläche bringbar ist. Ein derartig gestaltetes Halteelement ist in der Lage, eine oder mehrere zur Aufspannfläche parallele Bewegungsrichtungen der Grundplatte zu blokkieren.

Um auch eine Fixierung der Grundplatte in zur Aufspannfläche senkrechter Bewegungsrichtung zu erreichen, ist gemäß einer zweiten Variante vorgesehen, daß der Bolzen ein abgestufter Bolzen ist, dessen im Umfang größerer Bereich den Durchmesser der Bohrung der Grundplatte radial überragt.

Eine dritte Variante des erfindungsgemäßen Halteelements ist dadurch gekennzeichnet, daß ein Halteelement als L-förmige Anschlagleiste ausgebildet ist, die mit einem Schenkel den Randbereich der Grundplatte übergreift, während ihr zweiter Schenkel an dem Rand der Grundplatte anliegt, mindestens teilweise aus magnetischem Material besteht und mit seiner Unterfläche flächig in Kontakt mit der Aufspannfläche steht. Zur Erhöhung der magnetischen Induktion und damit der von dem magnetischen Material ausgehenden Anziehungskraft auf dem aus Stahl bestehenden Werkzeugträger ist diese Variante bevorzugt derart weitergebildet, daß eine aus einer abwechselnden Schichtung aus wenigstens einem Dauermagneten und mindestens einer Stahlleiste bestehende Schiene vorgesehen ist, deren Grenzflächen in zur Aufspannfläche senkrechter Richtung verlaufen und die ein Bestandteil des zweiten Schenkels der Anschlagleiste ist und daß die Pole jedes Dauermagneten senkrecht zur Aufspannfläche ausgerichtet sind. Eine besonders große Verstärkung der magnetischen Kraftwirkung wird erreicht, wenn an jeden Dauermagneten beidseitig wenigstens je eine Stahlleiste angrenzt.

Gemäß einer weiteren Ausbildung der L-förmigen Variante der Halteelemente ist vorgesehen, daß die an der Grundplatte anliegenden bzw. mit der Schiene verbundenen Schenkel aus amagnetischem Material, insbesondere Aluminium, bestehen. Dadurch wird die Streuung des Magnetfeldes der Schiene in Richtung auf das Stanzwerkzeug möglichst gering gehalten.

Eine weitere Variante der Ausbildung der erfindungsgemäßen Halteelemente besteht darin, daß das L-förmige Halteelement durch Befestigung eines weiteren, senkrecht auf die äußerste Stahlleiste der Schiene stehenden und mit der Unterfläche der Schiene fluchtenden Schenkels Z-förmig ausgebildet ist. Durch die somit vergrößerte, auf der Aufspannfläche zur Auflage kommende Unterfläche des Halteelements ist eine Stabilisierung der magnetischen Verbindung zwischen Halteelement und Aufspannfläche erreichbar.

Vorteilhaft ist es, wenn der mit der Unterfläche der Schiene fluchtende Schenkel Teil einer L-förmigen Abschlußleiste ist, deren zweiter Schenkel flächig an der äußersten Stahlleiste der Schiene anliegt. Damit sind die Dauermagneten und Stahlleisten in einfacher und kompakter Weise miteinander verbindbar, indem der flächig an der äußersten Stahlleiste der Schiene anliegende Schenkel der Abschlußleiste mit dem zweiten Schenkel der Anschlagleiste beispielsweise mittels einer durch die Schiene geführten Verschraubung verbunden werden.

Bevorzugt ist die Aufspannfläche mindestens längs eines Randes durch einen festen Anschlag begrenzt, an dem die Grundplatte mit wenigstens einem Rand anliegt, und daß zur weiteren Fixierung der Grundplatte auf der Aufspannfläche an jedem noch freien Rand der Grundplatte wenigstens ein L-förmiges oder Z-förmiges Halteelement angeordnet ist.

Gemäß einer weiteren vorteilhaften Ausbildung der Erfindung ist vorgesehen, daß an dem Anschlag eine Führungsleiste befestigt ist, die sich wenigstens abschnittsweise in Längsrichtung des Anschlags erstreckt und die Grundplatte in deren Randbereich übergreift und daß zur weiteren Fixierung der Grundplatte auf der Aufspannfläche wenigstens ein L-förmiges oder Z-förmiges Halteelement an dem der Führungsleiste gegenüberliegenden Rand der Grundplatte sowie an jedem noch freien Rand der Grundplatte ein Bolzen oder ein L- oder Z-förmiges Halteelement angeordnet ist.

Eine zur besseren Handhabung der Parallelanschläge besonders nützliche Weiterbildung der Erfindung sieht vor, daß zwei an unter 90° zueinander verlaufenden Rändern der Grundplatte angreifende Halteelemente fest miteinander verbunden sind. Dadurch ist eine Fixierung der Grundplatte in drei Bewegungsrichtungen gleichzeitig durch einen Handgriff möglich.

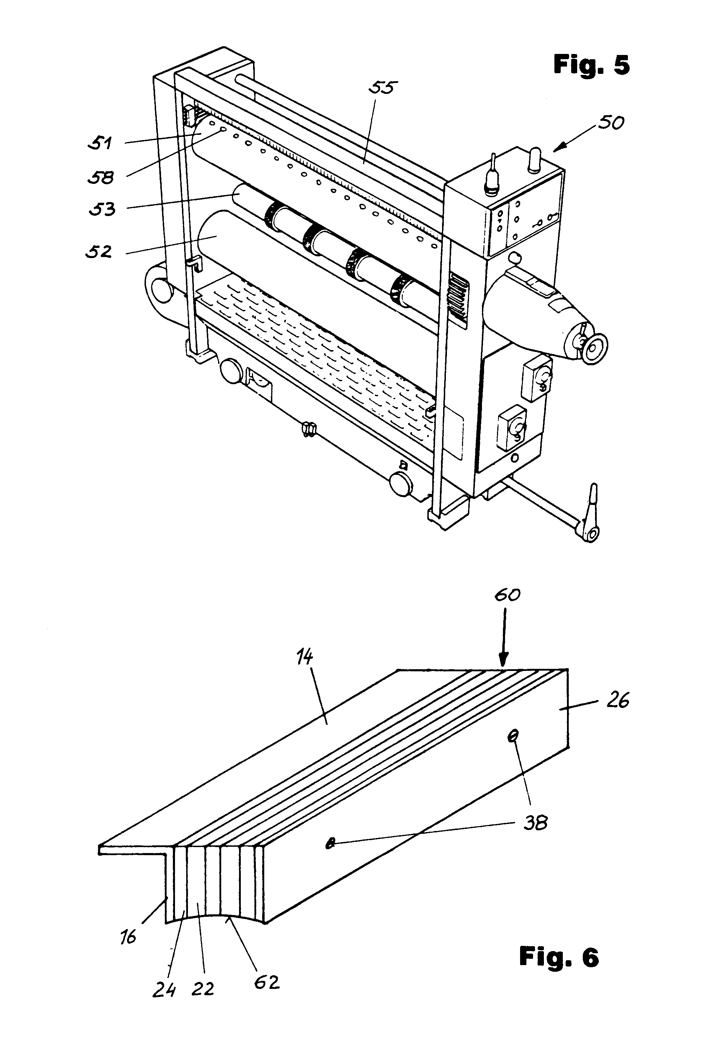

Zur Lösung der Aufgabe bei Rotationsstanzen sind Halteelemente bevorzugt, von denen sich eines dadurch auszeichnet, daß es entlang seiner Unterfläche eine teilzylindrische Kontur mit einer Krümmungsachse hat, die parallel zur Längsachse des Halteelementes verläuft (Fig 6). Das andere Halteelement zeichnet sich erfindungsgemäß dadurch aus, daß es eine auf einem Kreisbogen verlaufende Längsachse aufweist und daß die Unterfläche des Halteelementes eine etwa parallel zur Längsachse verlaufende Kontur mit einem Radius hat, der dem Radius der Aufspannfläche des Werkzeugträgers gleicht.

Die Erfindung wird nachstehend anhand der in der Zeichnung gezeigten bevorzugten Ausführungsbeipiele näher erläutert. Es zeigen:

Fig. 1 eine Perspektivdarstellung eines Werkzeugträgers einer Flachbettstanze mit aufliegender Grundplatte und Halteelementen im Schnitt;

Fig. 2 eine Perspektivdarstellung einer bevorzugten Ausführungsform eines Z-förmigen Halteelements;

Fig. 3 eine Draufsicht auf einen ausschnittsweise dargestellten Werkzeugträger mit aufliegender Grundplatte und einer weiteren Ausführungsform eines doppelten Z-förmigen Halteelements und

Fig. 4 eine Perspektivdarstellung eines Werkzeugträgers einer Flachbettstanze mit aufliegender Grundplatte und zwei weiteren Ausführungsformen von Halteelementen in Bolzenform.

Fig. 5 eine perspektivische Darstellung einer Rotationsstanze;

Fig. 6 eine Perspektivdarstellung eines der Ausführung gemäß Fig. 2 ähnlichen Halteelementes in einer Ausgestaltung zur Verwendung an Rotationsstanzen;

Fig. 7 in perspektivischer Darstellung ein speziell für Rotationsstanzen benötigtes Halteelement und

Fig. 8 eine Stirnansicht auf eine als Werkzeugträger dienende Walze einer Rotationsstanze mit aufgesetztem Stanzwerkzeug.

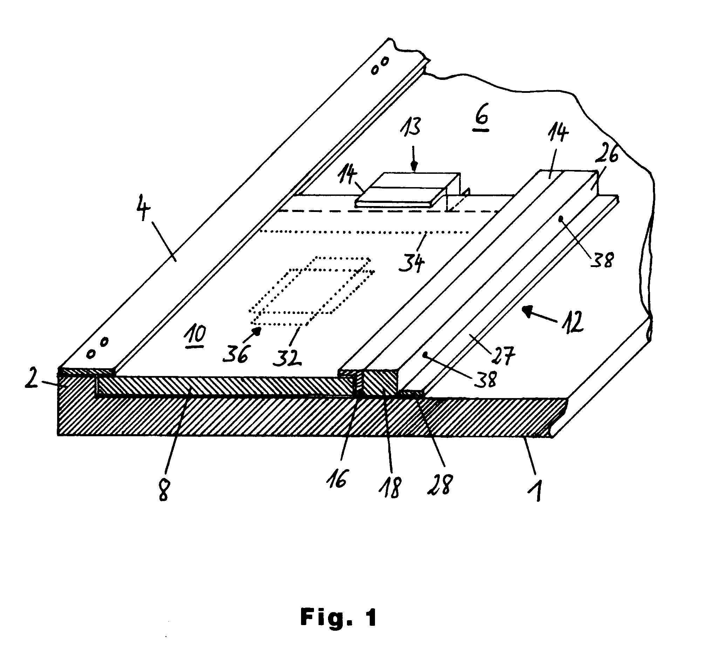

Das Ausführungsbeipiel einer Flachbettstanze gemäß Fig. 1 weist einen ebenen, plattenförmigen Werkzeugträger 1 auf, welcher längs eines Randes einen eine Aufspannfläche 6 begrenzenden Anschlag 2 als integralen Bestandteil oder angesetzte Leiste besitzt. Auf der Aufspannfläche 6 befindet sich eine an dem Anschlag 2 mit einem Rand anliegende Grundplatte 8, auf deren arbeitsseitiger Oberfläche 10 beispielhaft einige Schneid- und Preßkanten 32 zum Herstellen eines Zuschnitts 36 und eine Schneidkante 34 zum Durchtrennen einer Pappbahn dargestellt sind. Diese Schneid- und Preßkanten 32 sowie die Schneidkante 34 überragen die arbeitsseitige Oberfläche 10 der Grundplatte 8 entsprechend der erforderlichen Stanz- oder Rilltiefe senkrecht und stecken in die Grundplatte 8 schlitzartig durchsetzenden Führungen, so daß die in der Grundplatte 8 befindlichen Enden der Schneid- bzw. Preßkanten senkrecht auf der Aufspannfläche des Werkzeugträgers aufstehen und dort ein festes Widerlager finden.

Um nach erfolgtem Stanzen einer Pappbahn das Ablösen des Pappmaterials von den Schneidkanten 32, 34 zu erleichtern, sind diese von (hier nicht dargestellten) Schaumgummistreifen o. dgl. eingefaßt, welche auf der Grundplatte 8 befestigt sind und die beim Stanzen von dem Pappmaterial zusammengepreßt werden sowie die Pappe nach dem Stanzen durch ihre Fähigkeit, sich wieder aufzurichten, von den Schneidkanten abstreifen.

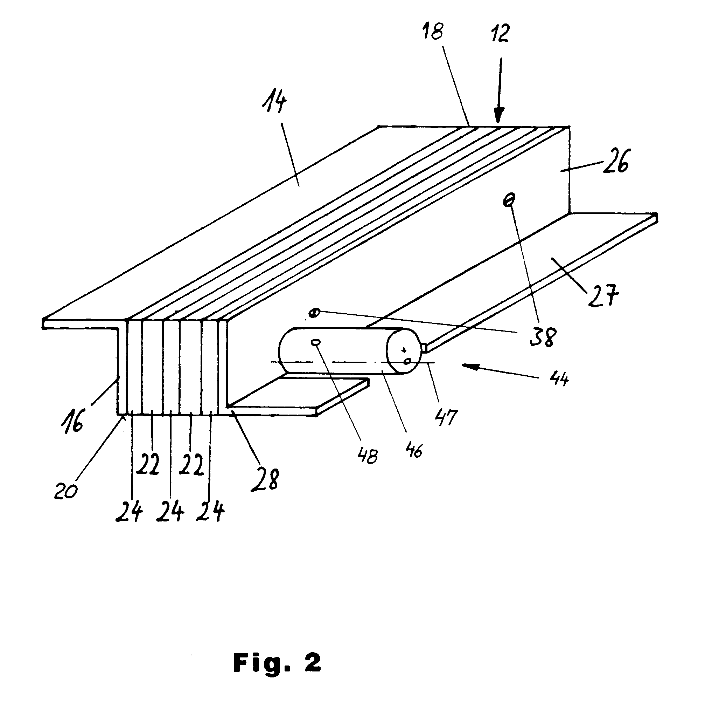

Auf dem Anschlag 2 ist eine flache Führungsleiste 4 befestigt, die die arbeitsseitige Oberfläche 10 der Grundplatte 8 in deren Randbereich teilweise übergreift, wodurch die Grundplatte 8 sicher an der Aufspannfläche 6 gehalten wird. Auf der der Führungsleiste 4 gegenüberliegenden Seite wird die Grundplatte 8 von einem Z-förmigen Halteelement 12 eingefaßt. Dieses Halteelement 12 weist ausweislich der Figuren 1 und 2 eine direkt an dem Rand der Grundplatte 8 anliegenden L-förmigen Leiste aus Aluminium auf, die mit einem Schenkel 14 die arbeitsseitige Oberfläche 10 der Grundplatte 8 in deren Randbereich teilweise übergreift. Ihr zweiter Schenkel 16 liegt flächig an dem Rand der Grundplatte 8 an und ist mit einer aus einer abwechselnden Schichtung aus wenigstens einem Dauermagneten 22 und einer Stahlleiste 24 bestehenden Schiene 18 verbunden, deren ebene Unterfläche 20 flächig auf der Aufspannfläche 6 aufliegt. An die äußerste Stahlleiste 24 der Schiene 18 schließt sich eine L-förmige Abschlußleiste 28 an, deren einer Schenkel 26 flächig an der äußersten Stahlleiste 24 der Schiene 18 anliegt und deren anderer Schenkel 27 mit der Unterfläche 20 der Schiene 18 fluchtet.

Zur weiteren Fixierung der Grundplatte 8 in zur Führungsleiste 4 paralleler Bewegungsrichtung ist an dem zu dieser Bewegungsrichtung querliegenden Rand der Grundplatte 8 ein weiteres Z-förmiges Halteelement 13 angeordnet, das im Ausführungsbeispiel bis auf seine geringere Länge identisch mit dem Halteelement 12 ist.

Der hier dargestellte Werkzeugträger 1 ist bei einer Flachbettstanze üblicherweise oberhalb eines die Pappbahn führenden, plattenförmigen Gegenstanzelements angeordnet, so daß die arbeitsseitige Oberfläche 10 der Grundplatte 8 vertikal nach unten auf die unter ihr durchlaufende Pappbahn weist. Das Gegenstanzelement führt dann im Betrieb die Hubbewegungen in Richtung auf die Grundplatte 8 des Stanzwerkzeugs aus.

Der in der Fig. 1 aufgrund des Schnitts nicht dargestellte vierte Rand der Grundplatte 8 kann entweder an einem weiteren, beispielsweise auch übereck geführten Anschlag 2 des Werkzeugträgers 1 anliegen oder auch von einem weiteren Halteelement 12, 13 begrenzt werden.

Fig. 2 zeigt den Aufbau einer Ausführungsform eines Z-förmigen Halteelements 12, 13. Danach weist die zu jedem Halteelement 12, 13 gehörende Schiene 18 eine abwechselnde Schichtung aus Dauermagneten 22 und Stahlleisten 24 auf, wobei an jeden Dauermagneten 22 beidseitig eine Stahlleiste 24 angrenzt. Die Pole der Dauermagneten 22 sind senkrecht zur Aufspannfläche 6 ausgerichtet, wodurch die Unterfläche 20 der Schiene 18 in besonders festen Kontakt mit der Aufspannfläche 6 bringbar ist. Die Schichtung 22, 24 der Schiene 18 wird beispielhaft durch eine die Grenzflächen der Schichtung senkrecht durchsetzende Verschraubung 38 zusammengehalten.

Während die mit der Schiene 18 verbundenen Schenkel 14, 16 zur Eindämmung von magnetischen Streufeldern aus amagnetischem Aluminium bestehen, ist die Abschlußleiste 28 zur weiteren Verstärkung des Magnetfeldes aus Stahl hergestellt. Jedoch kann diese Abschlußleiste 28 mit dem Ziel der Gewichtsersparnis auch aus Aluminium, Kunststoff oder anderem Material bestehen. Auch die Schenkel 14, 16 erfüllen ihren Zweck, wenn sie aus Kunststoff oder einem anderen amagnetischen Material bestehen. Die der Erhöhung der magnetischen Induktion und damit der magnetischen Kraftwirkung dienenden Stahlleisten 24 sind umso wirkungsvoller, je höher der Stahl legiert ist. Alternativ können bei allen Ausführungsbeispielen die Magnete als Einzelmagnete oder in der beschriebenen Schichtung auch in einem Kunststoffgehäuse o. dgl. angeordnet sein, welches außen die erforderlichen Anschlagflächen und Leisten als integrale Bestandteile aufweist.

Das Halteelement 12 gemäß Fig. 2 ist mit einer Trennhilfe 44 ausgerüstet, wie sie auch für alle anderen Halteelemente 13, 60, 70 benutzt wird, ohne in den entsprechenden Fig. allerdings eingezeichnet zu sein. Diese Trennhilfe dient dazu, das Halteelement auf einfache Weise aus der magnetischen Haftung an der Aufspannfläche des Werkzeugträgers lösen zu können. Zu diesem Zweck ist ein Nocken 46 vorgesehen, der im Ausführungsbeispiel die Form eines Zylinders hat. Er ist um eine Exzenterachse 47 drehbar am Halteelement gelagert. Zum Verdrehen steckt man einen Stift o. dlg. in eine vom Umfang in den Nocken hineinreichende Bohrung 48 und kann dann durch Verschwenken dieses Stiftes den Nocken um seine exzentrisch liegende Achse 47 verdrehen. Die Exzenterachse verläuft im Ausführungsbeispiel parallel zur Unterfläche 20 des Halteelementes 12 und in einem solchen Abstand von der Unterfläche, daß der Nocken in seiner einen Endstellung nicht aus der freiliegenden Unterfläche des Halteelementes hinausragt. Dies ist die Arbeitsstellung des Halteelementes in der es fest auf der Aufspannfläche eines Werkzeugträgers haftet. Dreht man die Trennhilfe aus dieser Position, wie sie auch in Fig. 2 gezeichnet ist, in ihre andere Extremlage, dann bewegt sich der Nocken 46 unter die Unterfläche 20 hinaus. Ruht das Halteelement zu diesem Zeitpunkt auf einem Werkzeugträger, dann hebt die Trennhilfe das Halteelemente etwas an, so daß es dann leicht abgenommen bzw. versetzt werden kann.

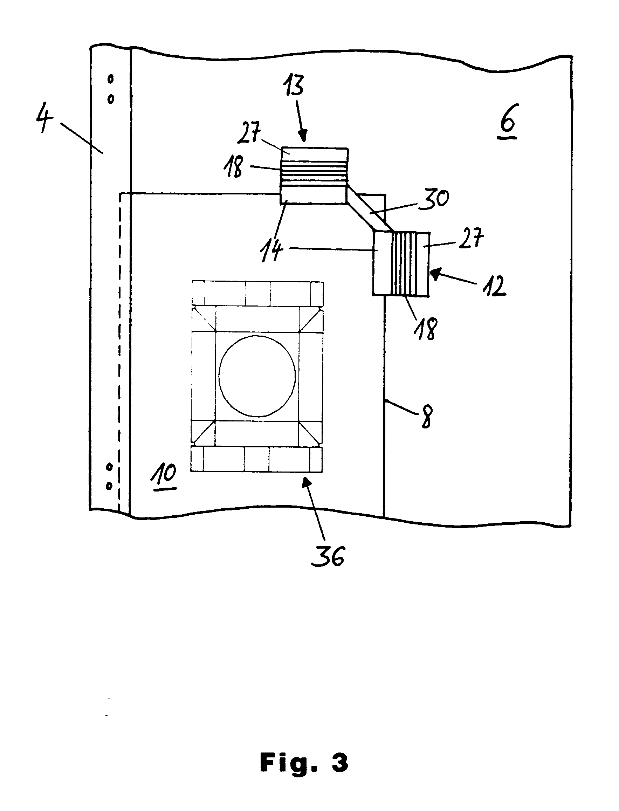

In Fig. 3 ist ein weiteres Ausführungsbeispiel zweier miteinander verbundener Z-förmiger Halteelemente 12, 13 dargestellt. Die Verbindung der beiden Halteelemente bildet beispielsweise ein Verbindungsstück 30, das mit den Schenkeln 14 der Halteelemente 12, 13 im Winkel von jeweils 45° verschweißt oder anderweitig verbunden ist. Somit ist ein einfach zu handhabender Doppelanschlag entstanden. Die Verbindung zweier an unter 90° zueinander verlaufenden Rändern der Grundplatte 8 angreifender Halteelemente kann jedoch auch direkt im Winkel von 90° erfolgen. Besitzt der Werkzeugträger 1 nur einen Anschlag 2 und demgemäß nur eine Führungsleiste 4, so kann die Grundplatte 8 auf der Aufspannfläche 6 mittels zweier doppelter Z-förmiger Halteelemente 12, 13 gemäß der dargestellten Form fixiert werden.

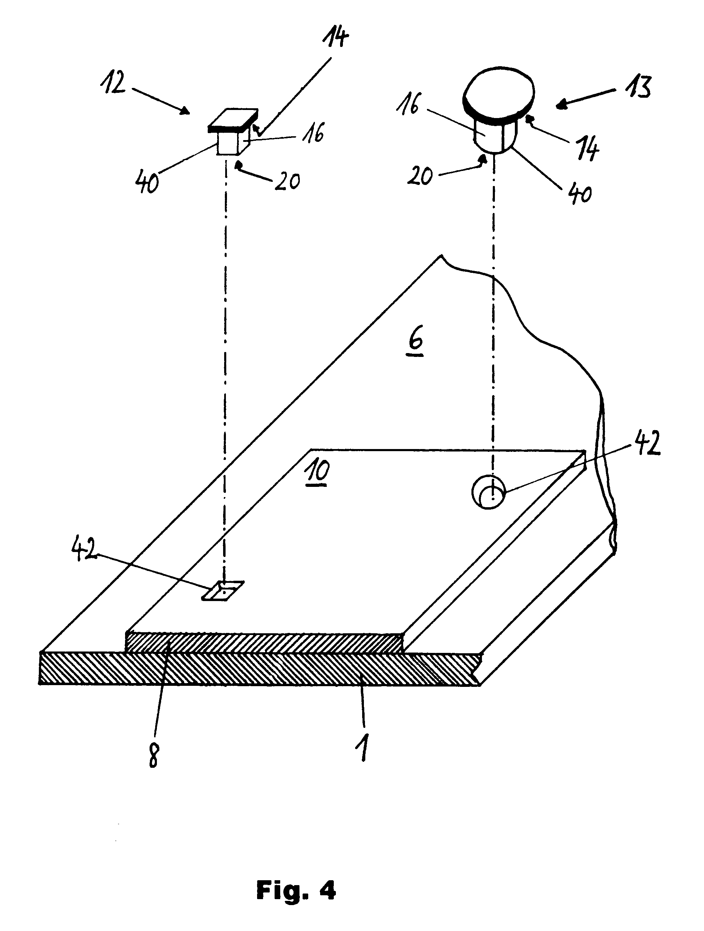

In Fig. 4 sind als weitere Ausführungsformen zwei Halteelemente 12, 13 in Bolzenform dargestellt. Die Umfangsfläche jedes Bolzens 40 bildet eine senkrecht zur Aufspannfläche 6 ausgerichtete Anschlagfläche 16 und die Unterfläche 20 jedes Bolzens 40 steht in magnetischer Wirkverbindung mit der Aufspannfläche 6, wenn die Bolzen 40 in die korrespondierende Bohrung 42 eingesetzt sind. Hierzu weist der Bolzen 40 an seinem unteren Ende einen Permanentmagneten auf.

Bei den dargestellten Bolzen 40 handelt es sich um abgestufte Bolzen, deren Anschlagfläche 14 den Umfang der Anschlagflächen 16 und den Durchmesser der Bohrungen 42 der Grundplatte 8 radial überragen, so daß im Querschnitt T-förmige Bolzen entstehen. Ein in der Fig. 4 links dargestelltes, im Grundriß viereckiges bolzenförmiges Halteelement 12 ist in der Lage, sämtliche Bewegungsrichtungen der auf dem Werkzeugträger 6 aufliegenden Grundplatte 8 zu blockieren, während von einem in der Fig. 4 rechts dargestellten bolzenförmigen Halteelement 13 aufgrund der im Grundriß runden Form seiner Anschlagfläche 16 wenigstens zwei Stück erforderlich sind, um die Grundplatte 8 auf der Aufspannfläche 6 zu fixieren.

Die in den Fig. 1 bis 4 beispielhaft dargestellten Ausführungsformen der Erfindung eröffnen ein weites Feld an Variationsmöglichkeiten bei deren Anwendung. Zur Fixierung der Grundplatte 8 auf der Aufspannfläche 6 des Werkzeugträgers 1 in zur Aufspannfläche 6 senkrechter Bewegungsrichtung ist entweder wenigstens ein möglichst zentral in der Grundplatte 8 angeordneter abgestufter Bolzen 40 oder wenigstens je ein L- oder Z-förmiges Halteelement 12, 13 an zwei einander gegenüberliegenden Rändern der Grundplatte 8 erforderlich. Eines der L- bzw. Z-förmigen Halteelemente 12, 13 kann durch einen in den Fig. 1 und 3 dargestellten Anschlag 2 und eine darauf befestigte Führungsleiste 4 ersetzt werden. Das Z-förmige Halteelement 13 in der Fig. 1 kann beispielsweise auch durch einen Bolzen 40 ersetzt werden, der entweder - wie das Z-förmige Halteelement 13 - am Rand der Grundplatte 8 angeordnet oder in eine Bohrung 42 eingesetzt wird. Da das Z-förmige Halteelement 13 in der Fig. 1 nur der Blockierung einer zur Führungsleiste 4 parallelen Bewegungsrichtung der Grundplatte 8 dient, würde an seiner Stelle sogar ein Bolzen 40 ohne radial überragende Anschlagfläche 14 ausreichen.

Besitzt der Werkzeugträger 1 keinen festen Anschlag 2 (siehe Fig. 4) wären beispielsweise 2 an diagonal gegenüberliegenden Ecken der Grundplatte 8 angeordnete doppelte Z-förmige Halteelemente 12, 13 (siehe Fig. 3) zur Fixierung der Grundplatte 8 auf der Aufspannfläche 6 ausreichend oder zwei im Bereich diagonal einander gegenüberliegender Ecken der Grundplatte 8 in Bohrungen 42 eingesetzte Bolzen 40 oder auch an jedem freien Rand der Grundplatte 8 ein L- bzw. Z-förmiges Halteelement 12, 13.

In Fig. 5 ist eine herkömmliche Rotationsstanze 50 abgebildet, welche in einem pauschal mit 55 bezeichneten Gestell eine obere Walze als Werkzeugträger 51, eine untere Walze als Gegendruckelement 52 sowie eine dritte Walze 53 zum Abstreifen und/oder Niederhalten aufweist. Alle Walzen werden mit einer Umfangsgeschwindigkeit angetrieben, die der Vorschubgeschwindigkeit der zu bearbeitenden Pappe entspricht.

Der Werkzeugträger 1 einer Ausführung gemäß dem Stand der Technik weist eine Vielzahl von Gewindebohrungen 58 auf, die von der Oberfläche des Werkzeugträgers aus in Richtung auf dessen Zylinderachse ausgerichtet sind. In Axialrichtung gesehen sind die Gewindebohrungen 58 in achsparallelen Reihen angeordnet, von denen in Fig. 5 nur eine dargestellt ist. Viele dieser Reihen sind gleichmäßig über den Umfang des Werkzeugträgers 51 verteilt. Herkömmlich ist es, die Stanzwerkzeuge mittels Schrauben auf dem Werkzeugträger 51 zu befestigen, die in diese Gewindebohrungen 58 eingeschraubt sind.

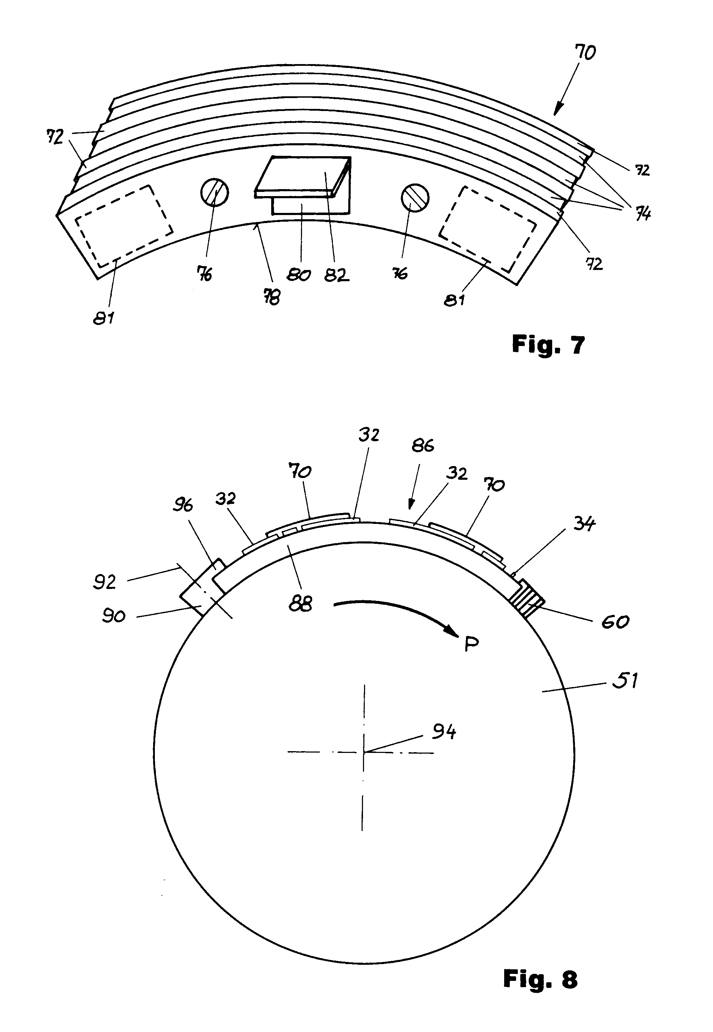

Bei erfindungsgemäßem Vorgehen werden die Stanzwerkzeuge jedoch auch bei Rotationsstanzen in der zuvor beschriebenen Weise auf dem Werkzeugträger 51 fixiert. Die Fig. 6 und 7 zeigen zwei hierfür verwendbare Halteelemente 60, 70. Das Halteelement 60 ähnelt weitgehend dem bereits im Detail beschriebenen Halteelement 12 (Fig. 2), so daß in Fig. 6 die mit der Fig. 2 übereinstimmenden Teile mit gleichen Bezugszeichen versehen sind und auf die Beschreibung der Fig. 2 verwiesen werden kann. Abweichend ist bei dem Halteelement 60, daß es im Schnitt eine L-förmige Konfiguration hat und daß die mit dem Werkzeugträger 51 in Berührung kommende Unterfläche 62 des Haltelementes 60 eine zylindrische Krümmung aufweist, deren Radius gleich dem Radius des Werkzeugträgers 51 ist. Die Achse der Krümmung verläuft bei dem Halteelement 60 in dessen Längsrichtung und beim Einsatz des Halteelementes 60 auf einem Werkzeugträger 51 achsparallel zu dessen Zylinderachse. Somit kann das Halteelement 60 auch als achsparalleles Halteelement bezeichnet werden.

Das Halteelement 70 gemäß Fig. 7 besteht aus einer Anzahl von gekrümmten Stahl- und Magnetleisten 72, 74, deren Längsachse kreisbogenförmig verläuft. Die Leisten 72, 74 werden mit Hilfe von Schrauben 76 zu einem Paket zusammengefaßt. Die Unterfläche 78 des Paketes ist einachsig gekrümmt mit einem Krümmungsradius, der dem Außendurchmesser des Werkzeugträgers 51 gleicht.

Analog den Leisten 14 bei den Halteelementen 12 oder 60 weist das Halteelement 70 auf mindestens einer der Stirnflächen des Pakets mindestens einen Winkel 80 o. dgl. auf, der an der außen liegenden Leiste 72 befestigt oder Teil dieser Leiste ist. Auch hier besteht natürlich die Möglichkeit, die Magnete 74 in einem Kunststoffgehäuse unterzubringen, so daß dann anstelle des Winkels 80 ein Gehäusevorsprung o. dgl. tritt. Gezeichnet ist in Fig. 7 ein Haltewinkel 80. Bevorzugt werden mehrere solche Haltewinkel je Halteelement 70 eingesetzt, wie es durch gestrichelte Linien 81 in Fig. 7 angedeutet ist. Da die Krümmung des Halteelementes 70 senkrecht zur Zylinderachse des Werkzeugträgers 51 verläuft, kann man - wie in Fig. 7 - die Haltewinkel 80 vergleichsweise kurz ausbilden, um gekrümmte Schenkel 82 zum Niederhalten des Stanzwerkzeuges zu vermeiden. Alternativ ist natürlich eine durchgehend gekrümmte Halteleiste des Winkels 80 denkbar bzw. eine solche Halteleiste, die entlang einer ihrer Längskanten mit einer außenliegenden Leiste 72 verschweißt ist. Wie bei allen Halteelementen ist es insoweit allein wichtig, daß der Schenkel bzw. die Halteleiste 82 des Winkels 80 o. dgl. einen solchen lichten Abstand von der Unterfläche 82 des Halteelementes 70 hat, der gleich der Dicke der Grundplatte 88 des Stanzwerkzeuges 86 ist.

Fig. 8 zeigt schließlich, wie ein Stanzwerkzeug 86 auf der zylindrisch gekrümmten Oberfläche des Werkzeugträgers 51 einer Rotationsstanze 50 befestigt ist. Dargestellt ist eine zylindrisch gekrümmte Grundplatte 88. Abgesehen von der Krümmung ist sie mit der oben erwähnten Grundplatte 8 identisch und weist die üblichen Schneidkanten 32, 34 etc.

auf.

Zum Befestigen des Stanzwerkzeuges 86 auf dem Werkzeugträger 51 dient zunächst eine Leiste 90, die im Ausführungsbeispiel - angedeutet durch eine strichpunktierte Linie 92 - am Umfang des Werkzeugträgers 51 angeschraubt ist und sich parallel zur Längsachse 94 des Werkzeugträgers 51 erstreckt. Die Leiste 90 weist einen die Grundplatte 88 übergreifenden Niederhalter 96 auf und entspricht somit in der Funktion den Teilen 2, 4 in dem eine Flachbettstanze betreffenden Ausführungsbeispiel der Fig. 1. Bevorzugt stützt die Leiste 90 die nachlaufende Kante des Stanzwerkzeuges 86 ab, wie es die Fig. 8 und der die Rotationsrichtung andeutende Pfeil P in Fig. 8 ausweist.

Die Leiste 90 benötigt zu ihrer Befestigung die in Fig. 5 erkennbaren Gewindebohrungen 58. Falls man auf diese völlig verzichten will oder falls man in der Position der Leiste 90 unabhängig von der Lage von Gewindebohrungen sein will, um das Ausrichten des Stanzwerkzeuges gänzlich frei vornehmen zu können, dann kann man die Leiste 90 auch durch ein Halteelement 60 nachbilden, welches ohne Schrauben auskommt.

In Fig. 8 wird das Stanzwerkzeug 86 an seiner der Leiste 90 gegenüberliegenden Kante von einem Halteelement 60 fixiert. Dieses sitzt im Ausführungsbeispiel also an der mit Bezug auf die Drehrichtung P vorlaufenden Kante des Stanzwerkzeuges 86.

Um ein Auswandern des Stanzwerkzeuges auch in Richtung der Achse 94 des Werkzeugträgers 51 zu unterbinden, werden die in Drehrichtung P verlaufenden seitlichen Kanten des Stanzwerkzeuges 86 mittels jeweils mindestens einem Halteelement 70 fixiert; im Ausführungsbeispiel der Fig. 8 befindet sich an der dem Betrachter zugekehrten Kante des Stanzwerkzeuges 86 kein Halteelement; es wurde fortgelassen, um die Lage der Schneidkanten 32, 34 besser darstellen zu können. Dagegen sind an der dem Betrachter abgekehrten Kante des Stanzwerkzeuges 86 zwei Halteelemente 70 angedeutet.

Für den Betrieb einer gemäß der Erfindung ausgerüsteten Rotationsstanze muß beachtet werden, daß nicht unerhebliche Fliehkräfte wirken, die von den Halteelementen sicher abgeleitet werden müssen. Je nach Umfangsgeschwindigkeit des Werkzeugträgers 51 müssen also eventuell kräftigere Magnete eingesetzt werden als im Falle einer Flachbettstanze.

Schließlich sei noch angemerkt, daß die Halteelemente 60 und 70 bevorzugt mit den Trennhilfen ausgerüstet sind, wie sie bei dem Ausführungsbeispiel eines Halteelementes gemäß Fig. 2 erläutert worden sind.

**Patentansprüche**

1. Stanze, insbesondere Flachbett- oder Rotationsstanze, mit einem metallischen Werkzeugträger (1) und mit einem Stanzwerkzeug, das über die arbeitsseitige Oberfläche (10) einer Grundplatte (8) senkrecht hinausragende, gegebenenfalls von Schaumgummistreifen eingefaßte Schneid- und/oder Preßkanten (32) aufweist und mittels Halteelementen (12, 13) im wesentlichen flächig auf einer Aufspannfläche (6) des Werkzeugträgers (1) fixierbar ist, und mit einem von der Aufspannfläche (6) beabstandeten Gegenstanzelement,
dadurch gekennzeichnet, daß die Halteelemente (12, 13) wenigstens teilweise aus magnetischem Material bestehen und mindestens eine mit der Aufspannfläche (6) des Werkzeugträgers (1) flächig in magnetischen Wirkkontakt bringbare Unterfläche (20) besitzen, sowie mindestens eine Anschlagfläche (14, 16) aufweisen, die an Flächenabschnitten der Grundplatte (8) zu deren Fixierung auf der Aufspannfläche (6) anlegbar ist.

2. Stanze nach Anspruch 1,
dadurch gekennzeichnet, daß ein Halteelement (12, 13) als Bolzen (40) ausgebildet ist, dessen Umfangsfläche eine im wesentlichen senkrecht zur Aufspannfläche (6) ausgerichtete Anschlagfläche (16) bildet und der durch eine senkrecht zur Aufspannfläche (6) die Grundplatte (8) durchsetzende Bohrung (42) oder an einem Rand der Grundplatte (8) anliegend mit seiner Unterfläche (20) in Wirkverbindung mit der Aufspannfläche (6) bringbar ist.

3. Stanze nach Anspruch 2,
dadurch gekennzeichnet, daß der Bolzen (40) ein abgestufter Bolzen ist, dessen im Umfang größerer Bereich (14) den Durchmesser der Bohrung (42) der Grundplatte (8) radial überragt.

4. Stanze nach Anspruch 1,
dadurch gekennzeichnet, daß ein Halteelement (12, 13, 60, 70) als L-förmige Anschlagleiste ausgebildet ist, die mit einem Schenkel (14, 82) den Randbereich der Grundplatte (8, 88) übergreift, während ihr zweiter Schenkel an dem Rand der Grundplatte anliegt, mindestens teilweise aus magnetischem Material besteht und mit seiner Unterfläche (20, 62, 84) flächig in Kontakt mit der Aufspannfläche (6) steht.

5. Stanze nach Anspruch 4,
dadurch gekennzeichnet, daß eine aus einer abwechselnden Schichtung aus wenigstens einem Dauermagneten (22, 74) und mindestens einer Stahlleiste (24, 72) bestehende Schiene (18) vorgesehen ist, deren Grenzflächen in zur Aufspannfläche (6) senkrechter Richtung verlaufen und die ein Bestandteil des zweiten Schenkels (16) der Anschlagleiste ist und daß die Pole jedes Dauermagneten (22) senkrecht zur Aufspannfläche ausgerichtet sind.

6. Stanze nach Anspruch 4 oder 5,
dadurch gekennzeichnet, daß das L-förmige Halteelement (12, 13) durch Befestigung eines weiteren, senkrecht auf die äußerste Stahlleiste (24) der Schiene (18) stehenden und mit der Unterfläche (20) der Schiene (18) fluchtenden Schenkels (27) Z-förmig ausgebildet ist.

7. Stanze nach mindestens einem der Ansprüche 4 bis 6,
dadurch gekennzeichnet, daß zu den die Fixierung der Grundplatte (8) auf der Aufspannfläche (6) des Werkzeugträgers (1) bewirkenden Halteelementen wenigstens je ein L-förmiges oder Z-förmiges Halteelement (12, 13) an zwei einander gegenüberliegenden Rändern der Grundplatte (8) gehören.

8. Stanze nach mindestens einem der Ansprüche 4 bis 6,
dadurch gekennzeichnet, daß ihre Aufspannfläche (6) mindestens längs eines Randes durch einen festen Anschlag (2, 90) begrenzt ist, an dem die Grundplatte (8, 88) mit wenigstens einem Rand anliegt, und daß zur weiteren Fixierung der Grundplatte auf der Aufspannfläche an jedem noch freien Rand der Grundplatte wenigstens ein L-förmiges oder Z-förmiges Halteelement (12, 13, 60, 70) angeordnet ist.

9. Stanze nach Anspruch 8,
dadurch gekennzeichnet, daß an dem Anschlag (2, 90) eine Führungsleiste (4) befestigt ist, die sich wenigstens abschnittsweise in Längsrichtung des Anschlags erstreckt und die Grundplatte (8, 88) in deren Randbereich übergreift und daß zur weiteren Fixierung der Grundplatte auf der Aufspannfläche (6) wenigstens ein L-förmiges oder Z-förmiges Halteelement (12, 13, 60, 70) an dem dem Anschlag (2, 90) gegenüberliegenden Rand der Grundplatte sowie an jedem noch freien Rand der Grundplatte ein Bolzen (40) und/oder ein L- und/oder Z-förmiges Halteelement (12, 13, 60, 70) angeordnet ist.

10. Stanze nach mindestens einem der Ansprüche 1 bis 9,
dadurch gekennzeichnet, daß zwei an unter 90° zueinander verlaufenden Rändern der Grundplatte (8, 88) angreifende Halteelemente fest miteinander verbunden sind (Fig. 3).

11. Stanze nach mindestens einem der vorhergehenden Ansprüche,
dadurch gekennzeichnet, daß das Halteelement (60) entlang seiner Unterfläche (62) eine teilzylindrische Kontur mit einer Krümmungsachse hat, die parallel zur Längsachse des Halteelementes verläuft (Fig. 6).

12. Stanze, nach mindestens einem der Ansprüche 1 bis 10,
dadurch gekennzeichnet, daß das Halteelement (70) eine auf einem Kreisbogen verlaufende Längsachse aufweist und daß die Unterfläche (84) des Halteelementes eine etwa parallel zur Längsachse verlaufende Kontur mit einem Radius hat, der dem Radius der Aufspannfläche des Werkzeugträgers (51) gleicht.

13. Stanze, nach mindestens einem der vorhergehenden Ansprüche,
dadurch gekennzeichnet, daß das Halteelement (12, 13, 60, 70) mit einer Trennhilfe (44) versehen ist, welche einen Nocken (46) aufweist, der um eine parallel bzw. tangential zur zugehörigen Unterfläche des Halteelementes ausgerichtete Exzenterachse verdrehbar ist, in seiner einen exzentrischen Grenzstellung die Ebene der Unterfläche nicht überragt und im übrigen aus dieser Ebene in seine andere extreme Exzenterstellung herausbewegbar ist.

## Claims

1. A press, in particular a flatbed or rotary press, having a metallic tool-carrier (1) and a press tool which exhibits cutting edges and/or presser edges (32) projecting perpendicularly above the surface (10) on the working side of a baseplate (8) and framed if necessary by foam rubber strips, and may be fixed by means of retainer members (12, 13) essentially flat against a mounting table (6) on the tool-carrier (1), and having a counterpunch member set at a distance from the mounting table (6),
characterized in that the retainer members (12, 13) consist at least partially of magnetic material and have at least one underface (20) which may be brought into effective magnetic contact flat against the mounting table (6) on the tool-carrier (1), as well as exhibiting at least one stopface (14, 16) which may be laid against portions of the area of the baseplate (8) for fixing it to the mounting table (6).

2. A press as in Claim 1, characterized in that

one retainer member (12, 13) is made as a pin (40) the peripheral area of which forms a stopface (16) aligned essentially perpendicular to the mounting table (6) and which may be brought through a hole (42) drilled through the baseplate (8) perpendicular to the mounting table (6) or resting against one edge of the baseplate (8), with its underface (20) in effective connection with the mounting table (6).

3. A press as in Claim 2, characterized in that the pin (40) is a stepped pin the region (14) of greater circumference of which projects radially beyond the diameter of the hole (42) drilled in the baseplate (8).

4. A press as in Claim 1, characterized in that one retainer member (12, 13, 60, 70) is made as a L-shaped stop-bar which with one arm (14, 82) overlaps the edge region of the baseplate (8, 88), whilst its second arm rests against the edge of the baseplate, consists at least partially of magnetic material and lies with its underface (20, 62, 84) in contact flat against the mounting table (6).

5. A press as in Claim 4, characterized in that a rail (18) which consists of an alternate lamination of at least one permanent magnet (22, 74) and at least one steel bar (24, 72) and the boundary areas of which run in the direction perpendicular to the mounting table (6) is provided as one component of the second arm (16) of the stop-bar, and that the poles of each permanent magnet (22) are aligned perpendicularly to the mounting table.

6. A press as in Claim 4 or 5, characterized in that the L-shaped retainer member (12, 13) is made Z-shaped by fastening another arm (27) to stand perpendicular to the outermost steel bar (24) of the rail (18) and flush with the underface (20) of the rail (18).

7. A press as in at least one of the Claims 4 to 6, characterized in that to the retainer members which bring about the fixing of the baseplate (8) to the mounting table (6) of the tool carrier (1) belong one L-shaped or Z-shaped retainer member (12, 13) at each of two edges of the baseplate (8) lying opposite one another.

8. A press as in at least one of the Claims 4 to 6, characterized in that along at least one edge of its mounting table (6) it is bounded by a fixed stop (2, 90) against which the baseplate (8, 88) rests by at least one edge, and that for further fixing of the baseplate to the mounting table at least one L-shaped or Z-shaped retainer member (12, 13, 60, 70) is arranged at each edge of the baseplate which is still free.

9. A press as in Claim 8, characterized in that a guidebar (4) is fastened to the stop (2, 90) and extends at least in portions in the direction longitudinal to the stop and overlaps the baseplate (8, 88) in the region at the edge of the latter and that for further fixing of the baseplate to the mounting table (6) at least one L-shaped or Z-shaped retainer member (12, 13, 60, 70) is arranged at the edge of the baseplate opposite the stop (2, 90) as well as a pin (40) and/or a L-shaped and/or Z-shaped retainer member (12, 13, 60, 70) at each edge of the baseplate which is still free.

10. A press as in at least one of the Claims 1 to 9, characterized in that two retainer members which engage with edges of the baseplate (8, 88) running at 90° to one another are connected firmly together (Figure 3).

11. A press as in at least one of the preceding Claims, characterized in that the retainer member (60) has along its underface (62) a partially cylindrical contour with an axis of curvature which runs in parallel with the longitudinal axis of the retainer member (Figure 6).

12. A press as in at least one of the Claims 1 to 10, characterized in that the retainer member (70) exhibits a longitudinal axis running along an arc of a circle and that the underface (84) of the retainer member has a contour running approximately in parallel with the longitudinal axis at a radius which is equal to the radius of the mounting table of the tool-carrier (51).

13. A press as in at least one of the preceding Claims, characterized in that the retainer member (12, 13, 60, 70) is provided with an aid (44) to separation which exhibits a cam (46) which may be twisted about an eccentric axis aligned in parallel with or respectively tangential to the associated underface of the retainer member and in its one limiting eccentric position does not project beyond the plane of the underface and for the rest may be moved out of this plane into its other extreme eccentric position.

**Revendications**

**1.** Presse à découper-estamper, notamment presse à découper-estamper plate ou presse à découper-estamper rotative, comportant un support d'outil (1) métallique et un outil de découpage-estampage présentant des arêtes de coupe et/ou de compression (32), qui font saillie perpendiculairement hors de la surface extérieure (10) située côté travail d'une plaque de base (8), et qui le cas échéant sont bordées par des bandes de caoutchouc-mousse, l'outil étant susceptible d'être fixé, au moyen d'éléments de maintien (12, 13), essentiellement selon un contact surfacique sur une surface d'ablocage (6) du support d'outil (1), l'ensemble comportant également un élément de découpage-estampage conjugué situé à distance de la surface d'ablocage (6), caractérisée en ce que les éléments de maintien (12, 13) sont réalisés au moins en partie, en un matériau magnétique et comportent au moins une surface inférieure (20) susceptible d'être amenée en contact surfacique actif, magnétique, avec la surface d'ablocage (6) du support d'outil (1), ainsi qu'au moins une surface de butée (14, 16), qui peut être appliquée contre des tronçons de surface de la plaque de base (8) pour la fixation de celle-ci sur la surface d'ablocage (6).

**2.** Presse à découper-estamper selon la revendication 1, caractérisée en ce qu'un élément de maintien (12, 13) est réalisé sous la forme d'une cheville (40), dont la surface périphérique forme une surface de butée (16) orientée sensiblement de manière perpendiculaire à la surface d'ablocage (6), et qui, par sa surface inférieure (20), est susceptible d'être amenée en liaison active avec la surface d'ablocage (6), au travers d'un perçage (32) traversant la plaque de base (8) perpendiculairement à la surface d'ablocage (6), ou en étant appliquée contre un bord de la plaque de base (8).

**3.** Presse à découper-estamper selon la revendication 2, caractérisée en ce que la cheville (40) est une cheville étagée, dont la partie (14) de plus grand périmètre, chevauche radialement le diamètre du perçage (42) de la plaque de base (8).

**4.** Presse à découper-estamper selon la revendication 1, caractérisée en ce qu'un élément de maintien (12, 13, 60, 70) est réalisé sous la forme d'une barre de butée en forme de "L", qui avec une aile (14, 82) chevauche la zone de bordure de la plaque de base (8) alors que sa seconde aile est appliquée contre le bord de la plaque de base, qui est réalisée au moins en partie en un matériau magnétique, et qui par sa surface inférieure (20, 62, 84) est en contact surfacique avec la surface d'ablocage (6).

**5.** Presse à découper-estamper selon la revendication 4, caractérisée en ce qu'il est prévu une glissière (18), qui est formée par un empilage alterné d'au moins un aimant permanent (22, 74) et d'au moins une barre d'acier (24, 72) dont les interfaces s'étendent dans une direction perpendiculaire à la surface d'ablocage (6), et qui forme une partie constitutive de la seconde aile (16) de la barre de butée, et en ce que les pôles de chacun des aimants permanents (22) sont orientés perpendiculairement à la surface d'ablocage.

**6.** Presse à découper-estamper selon la revendication 4 ou 5, caractérisée en ce que l'élément de maintien en forme de "L" (12, 13) est configuré en forme "Z" par la fixation d'une autre aile (27) perpendiculaire à la barre d'acier (24) la plus extérieure de la glissière (18), et alignée avec la surface inférieure (20) de la glissière (18).

**7.** Presse à découper-estamper selon l'une au moins des revendications 4 à 6, caractérisée en ce que font partie des éléments de maintien effectuant la fixation de la plaque de base (8) sur la surface d'ablocage (6) du support d'outil (1), au moins un élément de maintien (12, 13) en forme de "L" ou de "Z", sur chacun de deux bords opposés de la plaque de base (8).

**8.** Presse à découper-estamper selon l'une au moins des revendications 4 à 6, caractérisée en ce que sa surface d'ablocage (6) est délimitée au moins le long d'un bord, par une butée fixe (2, 90) contre laquelle vient s'appuyer la plaque de base (8, 88) avec au moins un bord, et en ce que pour compléter la fixation de la plaque de base sur la surface d'ablocage, sur chaque bord encore libre de la plaque de base est disposé au moins un élément de maintien en forme de "L" ou de "Z" (12, 13, 60, 70).

**9.** Presse à découper-estamper selon la revendication 8, caractérisé en ce que sur la butée (2, 90) est fixée une barre de guidage (4) qui s'étend au moins par tronçons dans la direction longitudinale de la butée et qui chevauche la plaque de base (8, 88) dans sa zone de bordure, et en ce que pour compléter la fixation de la plaque de base sur la surface d'ablocage (6), au moins un élément de maintien en forme de "L" ou de "Z" (12, 13, 60, 70) est disposé sur le bord de la plaque de base opposé à celui de la butée (2, 90), ainsi qu'une cheville (40) et/ou un élément de maintien en forme de "L" et/ou de "Z" (12, 13, 60, 70) est disposé sur chacun des bords encore libres de la plaque de base.

10. Presse à découper-estamper selon l'une au moins des revendications 1 à 9, caractérisée en ce que deux éléments de maintien agissant sur des bords de la plaque de base (8, 88) formant entre-eux un angle de 90°, sont reliés entre-eux de manière fixe (figure 3).

11. Presse à découper-estamper selon l'une au moins des revendications précédentes, caractérisée en ce que l'élément de maintien (60) possède le long de sa surface inférieure (62) un contour partiellement cylindrique qui présente un axe de courbure s'étendant parallèlement à l'axe longitudinal de l'élément de maintien (figure 6).

12. Presse à découper-estamper selon l'une au moins des revendications 1 à 10, caractérisée en ce que l'élément de maintien (70) présente un axe longitudinal s'étendant le long d'un arc de cercle, et en ce que la surface inférieure (84) de l'élément de maintien possède un contour s'étendant sensiblement de manière parallèle à l'axe longitudinal, et présentant un rayon qui est égal au rayon de la surface d'ablocage du support d'outil (51).

13. Presse à découper-estamper selon l'une au moins des revendications précédentes, caractérisée en ce que l'élément de maintien (12, 13, 60, 70) est pourvu d'un dispositif d'aide à la séparation (44) qui comporte une came (46) susceptible de tourner autour d'un axe excentrique orienté parallèlement ou tangentiellement à la surface inférieure associée de l'élément de maintien, et qui dans une position excentrée limite ne dépasse pas du plan de la surface inférieure, et peut par ailleurs être déplacé hors de ce plan, vers son autre position excentrée extrême.

**Fig. 1**

**Fig. 2**

**Fig. 3**

**Fig. 4**

**Fig. 5**

55

51
58
53
52
50

**Fig. 6**

60
14
26
38
16
24 22 62

**Fig. 7**

**Fig. 8**